(19) **Europäisches Patentamt**
**European Patent Office**
**Office européen des brevets**

(11) **EP 1 899 778 B1**

(12) **EUROPEAN PATENT SPECIFICATION**

(45) Date of publication and mention
of the grant of the patent:
**19.08.2009 Bulletin 2009/34**

(51) Int Cl.:
***G05D 1/02*** *(2006.01)*     ***G01C 21/16*** *(2006.01)*

(21) Application number: **06745114.6**

(22) Date of filing: **24.05.2006**

(86) International application number:
**PCT/IL2006/000610**

(87) International publication number:
**WO 2006/137049 (28.12.2006 Gazette 2006/52)**

(54) **METHOD AND SYSTEM FOR AUTOMATICALLY GUIDING AN UNMANNED VEHICLE**

VERFAHREN UND SYSTEM ZUM AUTOMATISCHEN LENKEN EINES UNBEMANNTEN FAHRZEUGS

PROCEDE ET SYSTEME DE GUIDAGE AUTOMATIQUE D'UN VEHICULE SANS PILOTE

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.06.2005 IL 16926905**

(43) Date of publication of application:
**19.03.2008 Bulletin 2008/12**

(60) Divisional application:
**08007065.9 / 1 947 542**

(73) Proprietor: **Israel Aerospace Industries Ltd.**
**70100 Lod (IL)**

(72) Inventors:
• **SIGAL, Arkady**
**75581 Rishon-LeZion (IL)**

• **PINSKY, Alex**
**73133 Lapid (IL)**
• **APPELMAN, Dina**
**59402 Bat-Yam (IL)**
• **TSENTSIPER, Arieh**
**71700 Modi'in (IL)**

(74) Representative: **Grünecker, Kinkeldey, Stockmair & Schwanhäusser Anwaltssozietät Leopoldstrasse 4 80802 München (DE)**

(56) References cited:
**US-A- 5 646 854**     **US-A1- 2003 088 360**

## Description

## FIELD OF THE INVENTION

This invention relates to automatic guidance of unmanned vehicles.

## BACKGROUND OF THE INVENTION

US 6,453,238 (Brodie et al.) published September 17, 2002 describes a navigation system for tracking the position of an object using a GPS receiver responsive to GPS signals for periodically providing updates to a navigation processor. The system also includes a dead reckoning sensor (beacon) responsive to movement of the object providing updates to a navigation processor. The navigation processor determines object navigation states and propagates the object navigation states between measurement updates using the movement measurements. The navigation system mimics the traditional Kalman filter by integrating separate GPS-navigation, heading and speed Kalman filters.

US 5,923,270 (Sampo et al.) published on July 13, 1999 discloses an automatic steering system for unmanned vehicle that carries a navigation computer which receives positional information from an external positioning systems. A navigation computer and the ground station computer provide the vehicle with predetermined path. An established path as received from the external positioning system is compared with the predetermined one and the vehicle navigation is modified for compensating the deviations.

US 4,700,302 (Arakawa et al.) published October 13, 1987 discloses an automatic guidance system for an unmanned vehicle that causes the unmanned vehicle to move to a destination by a combination of traveling along a preset course, and turning and stopping at predetermined positions. A running control unit is provided to minimize the predicted vehicle position deviation for one step ahead. This is done by determining optimal control values in such a manner that a running state of the unmanned vehicle after a predetermined period of time is predicted by changing control values set in a drive unit in accordance with state values (e.g., position information and heading angle information) representing the current running state, and that the running state after the predetermined period of time matches with the directed operation of the unmanned vehicle, thereby accurately guiding the unmanned vehicle along the preset path.

US 6,539,294 (Kageyama) published March 25, 2003 and entitled *"Vehicle guidance system for avoiding obstacles stored in memory"* discloses a guiding apparatus that guides a vehicle to avoid obstruction based on obstruction position data stored in memory and updated by an updating unit. In guiding the vehicle between a source position Sp and a target position Tp, the system randomly allocates an intermediate position Mp and generates a course that includes the source position Sp and the intermediate position Mp. As described with reference to Fig. 18, a circle is drawn that is tangential to the direction vectors at both the source position Sp and the intermediate position Mp and whose connecting arc serves as the navigation path.

It thus emerges that construction of circles that bound adjacent segments of a route is known for the purpose of determining a route along which an unmanned vehicle may be guided between the segments.

It would therefore be desirable to provide a simpler method and system for guiding an unmanned vehicle.

Control systems require feedback to maintain stability and equilibrium. Kalman filters are commonly used in navigation systems since they yield control systems with guaranteed performance by solving formal matrix design equations which generally have unique solutions. An example of such an approach is described in US 6,205,401 (pickhard et al.) published March 20, 2001 and entitled *"Navigation system for a vehicle, especially α land craft".* This reference discloses a navigation system having at least one single-axis gyro for the vehicle vertical axis (z axis), having two accelerometers in the horizontal vehicle plane (x axis, y axis), and having a vehicle-axis velocity measurement device, for example, a distance-traveled sensor. In addition, supporting signal devices, in particular a satellite receiver and/or a map, are available as well as a controller, which uses a suitable Kalman filter to determine the vehicle position and/or the direction of travel from the measured and stored signals. The Kalman filter is assigned at least one partial filter, of which a first partial filter is used for dynamic leveling and/or a second partial filter is designed as a position filter which provides track calibration, position calibration and sensor calibration.

The Kalman filer, especially extended, while having many advantages, is complex, requires a lot of matrix operations (the matrix size depending on state vector and measurement vector size), and is unstable in cases where the measurement deviation is larger than the predefined error limits.

It would therefore be desirable to employ an alternative filter that is less demanding of computer resources than the extended Kalman filter and remains stable even in conditions where the Kalman filter is apt to become unstable.

## SUMMARY OF THE INVENTION

It is a first object of the present invention to provide an improved method and system for automatically guiding an unmanned vehicle along a predetermined route.

This objective is realized by a method for automatically guiding an unmanned vehicle along a predetermined route, the method comprising:

   (a) selecting first, second, third and fourth locations along said route defining adjacent first, second and third linear portions for a current iteration such that the first and second linear portions meet at the second location and the second and third linear portions meet at the third location;

(b) if an imaginary circle can be constructed that is mutually tangential to all three of said first, second and third linear portions or to projections thereof:

 i) guiding the vehicle according to the circle intercept method as herein defined until it reaches an imaginary point of contact **(M)** between said circle and the second linear portion or passes its traverse; and
 ii) thereafter selecting a fifth location along the route so that the second, third, fourth and fifth locations of the current iteration respectively constitute said first, second, third and fourth locations of a successive iteration and repeating from **(b);**

(c) if an imaginary circle cannot be constructed that is mutually tangential to all three of said first, second and third linear portions or to projections thereof:

 i) constructing an imaginary circle that is mutually tangential to the first and second linear portions;
 ii) guiding the vehicle along according to the leg intercept method as herein defined until the vehicle reaches an imaginary point of contact (M) between said circle and the first linear portion or passes its traverse; and
 iii) thereafter selecting a fifth location along the route so that the second, third, fourth and fifth locations of the current iteration respectively constitute said first, second, third and fourth locations for a successive iteration and repeating from **(b)**.

The invention uses a sliding window type of prediction for a set of four points and develops an equation that fits the required path, followed by the control command.

The method may further comprise

 (a) obtaining successive current speed and wheel angle signals of the vehicle;
 (b) obtaining successive current angle signals from an inertial navigation system;
 (c) obtaining current successive digital GPS velocity and position signals ;
 (d) filtering said signals to derive a current velocity signal of the vehicle;
 (e) integrating the current velocity signal to determine a predicted vehicle position;
 (f) comparing the predicted vehicle position with a current sensed position of the vehicle as determined by one or more vehicle positioning sensors;
 (g) if a difference between the predicted vehicle position and the current sensed position of the vehicle exceeds a predetermined threshold, then:

 i) if the computed current position remains stable for a predetermined number of successive iterations, using the computed current position for position filtering, vehicle control generation and in a subsequent iteration; and
 ii) otherwise eliminating the computed current position;

 (h) determining a new position of the vehicle as a weighted average of the respective sensed positions; and
 (i) using the new position to control the vehicle.

## BRIEF DESCRIPTION OF THE DRAWINGS

In order to understand the invention and to see how it may be carried out in practice, a preferred embodiment will now be described, by way of non-limiting example only, with reference to the accompanying drawings, in which:

 **Figs. 1a and 1b** show schematically alternative path segments derived from four consecutive coordinates of a predetermined vehicle trajectory;
 **Figs. 2a and 2b** show schematically navigation using circle interception and leg interception, respectively;
 **Fig. 3** is a flow diagram showing the principal operations carried out by a method for navigating a vehicle along a predetermined trajectory in accordance with a first embodiment of the invention;
 **Fig. 4** is a block diagram showing the functionality of a navigation data filter according to an example not being part of the invention.
 **Fig. 5** is a flow diagram showing the principal operations carried out by the navigation filter shown in Fig. 4;
 **Fig. 6** is a flow diagram showing in greater detail a method for velocity filtering for use by the navigation filter shown in Fig. 4;
 **Fig. 7** is a flow diagram showing in greater detail a method for azimuth filtering for use by the navigation filter shown in Fig. 4; and
 **Fig. 8** is a flow diagram showing in greater detail a method for computing a velocity component for use by the navigation filter shown in Fig. 4.

## DETAILED DESCRIPTION OF EMBODIMENTS

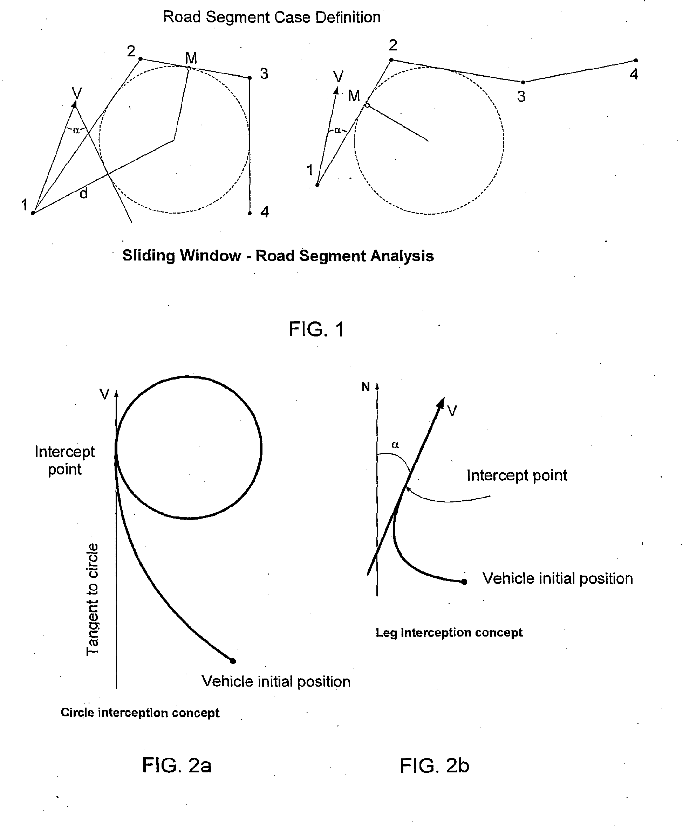

Figs. 1a and 1b show schematically a pair of sliding windows 10, 11 each defining alternative path segments derived from four consecutive coordinates 1, 2, 3 and 4 of a vehicle trajectory. Also shown in both of the sliding windows 10, 11 is a point **M** that constitutes a breakpoint to which the vehicle is guided for so long as its current position is behind the breakpoint **M.** Once the current position is in front of the breakpoint **M** i.e. the vehicle has advanced past the breakpoint **M,** a new sliding window is selected and the breakpoint **M** is moved forward. Each sliding window defines three successive segments denoted by coordinate pairs (1, 2), (2, 3) and (3, 4). Denoting the respective bearings of these three segments by the notation $\beta_{12}$, $\beta_{23}$ and $\beta_{34}$, the angle between the two segments (1, 2) and (2, 3) denoted by $\Psi_{123}$ is given by:

$$\Psi_{123} = \beta_{12} - \beta_{23}$$

Likewise, the angle between the two segments (2, 3) and (3, 4) denoted by $\Psi_{234}$ is given by:

$$\Psi_{234} = \beta_{23} - \beta_{34}$$

In accordance with the invention, there are two different approaches to guiding the vehicle on to the correct trajectory depending on whether the product of the angles $\Psi_{123}$, $\Psi_{234}$ is greater than or less than zero as represented by the sliding windows 10 and 11 shown in Fig. la and in Fig. 1b, respectively. These two approaches will be described in detail with particular reference to Fig. 2 but before doing so, some empirical explanation of the approaches may help.

In the simpler sliding window 10 shown in Fig. 1a, the object is to guide the vehicle around an imaginary circle 12 that is tangential to all three segments (1, 2), (2, 3) and (3, 4) or to projections thereof.

At each vehicle position two parameters are analyzed: the first is an angle between the vehicle velocity vector and the tangent to the circle at the point of intersection of the direction line connecting the vehicle position to the center of the imaginary circle ($\alpha$); the second is the distance from the vehicle position to the nearest tangent to the circle (d).

The vehicle is guided to the breakpoint **M** placed on the second segment (2, 3) by generating the wheel control command according to the values of the above parameters. The traverse of the breakpoint **M** corresponds to any line that passes through the breakpoint **M** perpendicular to the segment containing the breakpoint **M** - in this case the segment (2, 3). When the vehicle passes the traverse of the breakpoint **M,** the sliding window is moved to the next point in the trajectory such that the second segment (2, 3) now becomes the first segment of the next sliding window and the process repeats. The breakpoint **M** always lies on the imaginary circle 12. So, if the vehicle moves off track, it will always be guided to intersept the circle so as to intersect the breakpoint **M**

(or to pass its traverse as close as possible to it). This kind of navigation is known as circle interception and the wheel angle command that must be fed to the steering system is defined by:

1. Distance to the nearest tangent to the circle
2. Difference between the vehicle heading and the tangent bearing
3. Radius of the circle

On the other hand, in the case shown in Fig. 1b, successive segments of the trajectory do not close in on each other and the vehicle is guided according to the relative angular bearing between adjacent segments. In this case, the breakpoint **M** always lies on the first straight line segment (1, 2) in the current window 11 and corresponds to the point where the segment (1, 2) meets an imaginary circle 13. So, if the vehicle moves off track, it will always be guided to intersect the first segment (1,2) so as to intersect the breakpoint **M** or to pass its traverse. This kind of navigation is known as leg interception and the wheel angle command that must be fed to the steering system is defined by:

**1**. Distance to the segment (leg)
**2**. Difference between the vehicle heading and the segment bearing.

It should be emphasized that the size of the segment (distance between the points) is of the same order as the distance traveled by the vehicle in one second (vehicle velocity in meters/sec). Thus, the current measurement rate allows about 10 to 20 steering commands per segment to be generated.

The foregoing description makes reference to navigation using the circle interception and leg interception methods. Fig. 2a shows schematically that in the circle intercept concept the vehicle should intercept the circle in a way that its velocity vector **V** coincides with the tangent to the circle at the interception point. Fig. 2b shows schematically that in the leg intercept concept the vehicle should intercept the leg in a way that its velocity vector **V** coincides with the leg (velocity vector direction equal to the leg bearing).

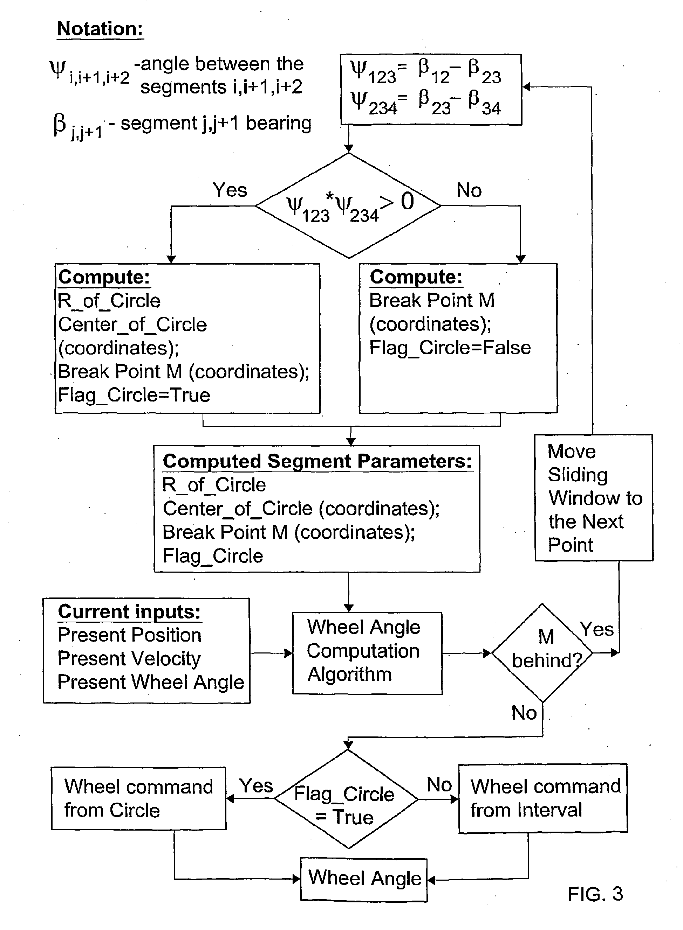

Fig. 3 is a flow diagram showing the principal operations carried out by a method according to an exemplary embodiment of the invention for navigating a vehicle along a predetermined trajectory. The algorithm computes the bearings of each of the three segments in the current window, computes the product of the angles $\Psi_{123}$, $\Psi_{234}$ and determines whether the current window conforms to the situation shown in Fig. 1a requiring circle intersection or to the situation shown in Fig. 1b requiring leg intersection. In the case that circle intersection is required the algorithm computes the radius and center of the unique circle 12 as well as the coordinates of the breakpoint **M** and sets an internal flag Flag_Circle to TRUCE.

In the case that leg intersection is required the algorithm computes the coordinates of the breakpoint **M** and sets an internal flag Flag_Circle to FALSE. In this case, there is theoretically an infinite number of circles of different radii and center coordinates that can be tangential to the first two segments (1, 2) and (2, 3) in the current window.

In both cases, the circle radius and center, the coordinates of the breakpoint M and the logical value of Flag_Circle are fed to a wheel angle computation algorithm that is responsive also the vehicle's present position and velocity for steering the vehicle towards the breakpoint **M.** The vehicle continues along the path determined by the wheel angle computation algorithm until it passes the breakpoint **M**, i.e. until the breakpoint **M** is behind the vehicle's present position. When this occurs, the first segment (1, 2) is discarded since the vehicle has now navigated past this segment, a new sliding window is defined starting at the previous second segment (2, 3) and including the next segment and the process repeats.

Prior to the vehicle passing the breakpoint **M,** the wheel command fed to the vehicle steering mechanism depends on the value of Flag__Circle. If Flag_Circle is TRUE, the wheel command is determined based on the radius and center of the circle 11 as to guide the vehicle along the circle 11. If Flag_Circle is FALSE, the wheel command is determined based on the angle between the vehicle velocity direction and the leg bearing ($\alpha$) and the distance from the vehicle's present position to the leg so as to guide the vehicle along the current first segment (1, 2).

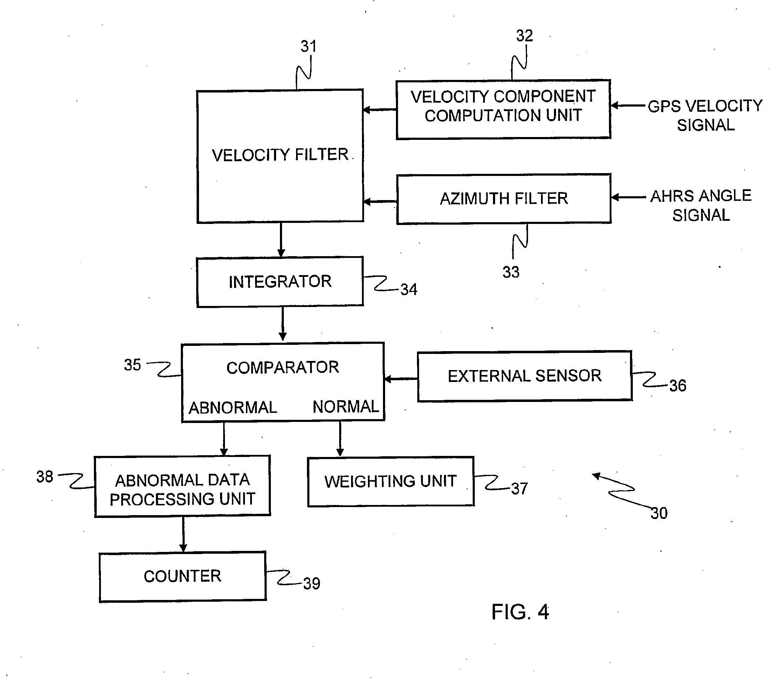

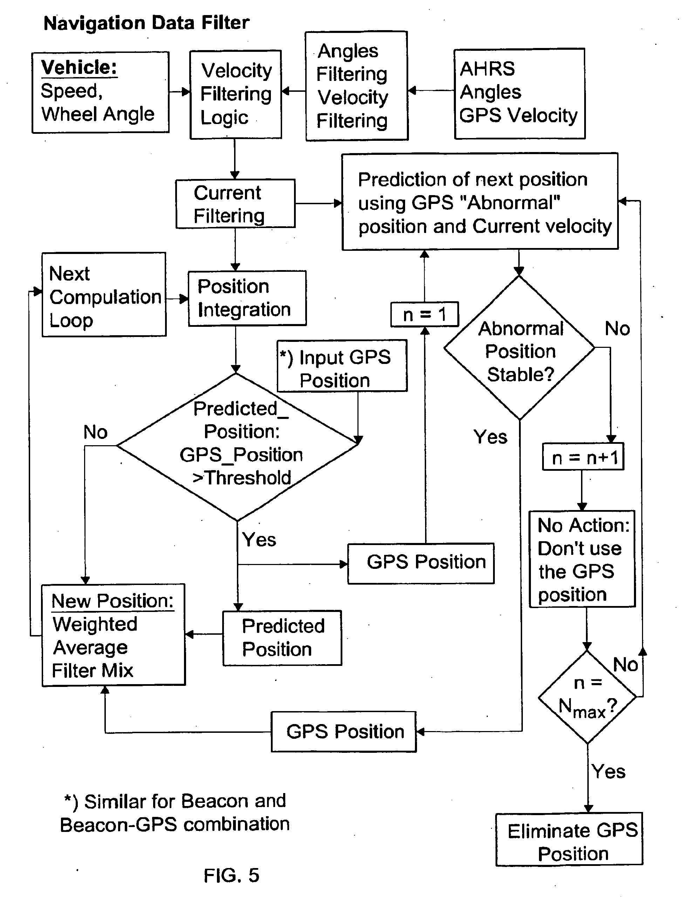

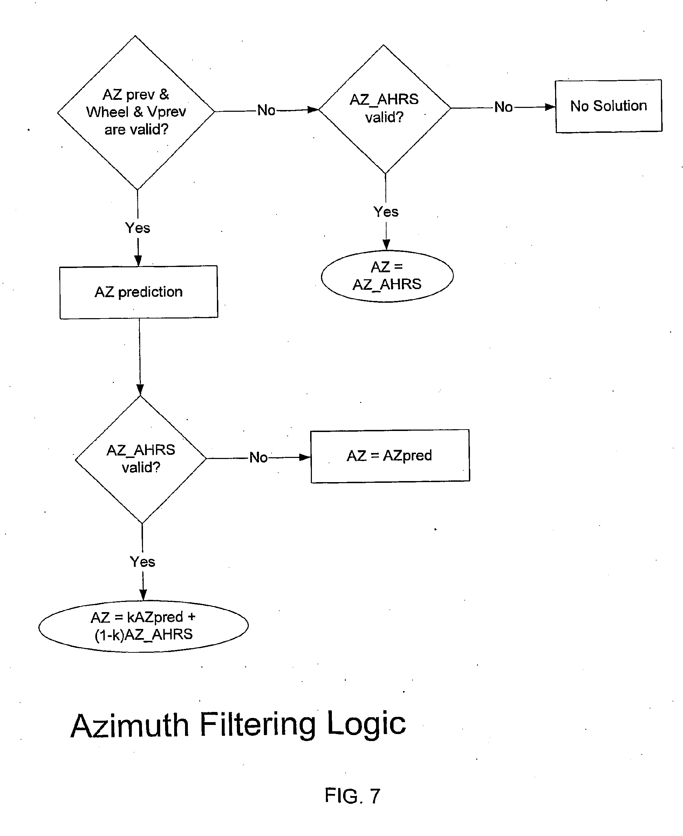

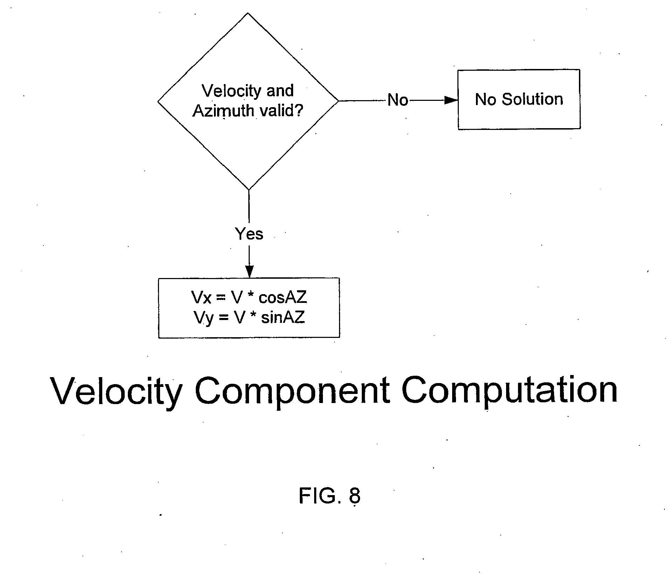

Fig. 4 is a block diagram showing the functionality of a navigation data filter 30 according to an exemple not being part of the invention whose operation will be described with reference to Fig. 5. The navigation data filter 30 includes a velocity filter 31, which receives as inputs signals indicative of vehicle speed and wheel angle as well as GPS velocity signals and AHRS angle signals via a velocity component computation unit 32 and an azimuth filter 33, respectively. Operation of the velocity component computation unit 32 and the azimuth filter 33 is described below with reference to Figs. 7 and 8, respectively. The AHRS is an inertial navigation unit located on the vehicle and coupled to a magnetometer. Its outputs (measurements) are used as an input to the velocity filter 31. An integrator 34 is coupled to the velocity filter 31 for integrating a current velocity signal output thereby so as to produce a predicted position signal. One or more comparators 35 determine whether the difference between the predicted position and one or more sensed positions as received from a respective external sensor 36 exceeds a predetermined threshold. In the normal case where the difference between the predicted position and the sensed position as received from the external sensors 36 is within the prescribed limit, the sensed positions and the predicted position are fed to a weighting unit 37 coupled to an output of the comparator 35. The weighting unit 37 computes a new position that is a weighted average of the input signals. The integrated position is compared with the sensed positions as provided by the external sensors 36 e.g. the GPS/beacon sensors, while the "new position" is the filtered position obtained by a weighted averages filter. If the difference between the predicted position and the sensed position as received from the external sensors 36 is outside the prescribed limit, this represents an abnormal condition. In this case, the current velocity derived from the velocity filter 31 is fed to an abnormal data processing unit 38 which determines whether the abnormal position is stable. The stability is defined by following the GPS data during a predetermined maximum number of measurement cycles. If the abnormal position is stable, the sensed position is fed to the weighting unit 37 which computes a new position that is a weighted average of the input signals including any abnormal sensed positions. If the abnormal sensed position is unstable for a predetermined number of iterations as determined by a counter 39, no action is taken whereby the sensed position is omitted from further analysis.

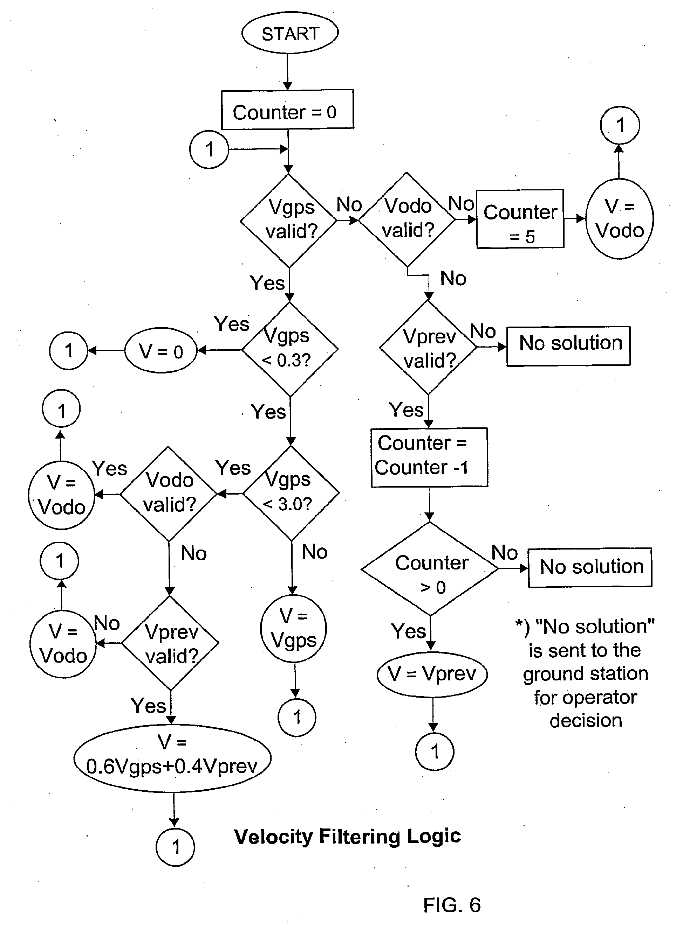

Fig. 6 is a flow diagram showing in greater detail a method for velocity filtering for use by the navigation filter 30 shown in Fig. 4. A counter is initialized to zero. If the GPS velocity is valid and is less than 0.3 meters/sec the filter velocity V is set to zero and the next GPS velocity signal is processed. If the GPS velocity is not greater than 0.3 meters/see but less than 3 meters/sec, then the vehicle speed as determined by its odometer is considered. The odometer speed is considered valid if the speed signal is successfully received, decoded, and the sensor validity flag is "OK". If the current odometer speed is valid, the filter velocity V is set to the current odometer speed and the next GPS velocity signal is processed. If the current odometer speed and the previous filter velocity are not valid, then the filter velocity V is set to the GPS velocity and the next GPS velocity signal is processed. If the current odometer speed is not valid but the previous filter velocity was valid, then the filter velocity V is set to an average weighted value given by $V = 0.6V_{GPS} + 0.4V_{PREV}$ and the next GPS velocity signal is then processed. If the GPS velocity is greater than 3, then the filter velocity V is set to the current GPS velocity and the next GPS velocity signal is processed.

If the current GPS velocity signal is not valid, but the current odometer speed is valid, then the counter is set to 5, the filter velocity V is set to the current odometer speed and the next GPS velocity signal is processed. If neither the current GPS velocity signal nor the current odometer speed is valid, but the previous filter velocity V was valid, then the counter is decremented by one and for so long as the counter value is greater than zero, the filter velocity V is set to its previous value. In effect this means that where the current odometer speed is invalid, the filter velocity V is set to the previous valid odometer speed providing that the odometer speed is not invalid for more than five iterations. Otherwise, in either of the cases where the previous filter velocity V was not valid or the counter is not greater than zero, there is no algorithmic solution and the filter velocity V is sent to the ground station operator for manual intervention.

Fig. 7 is a flow diagram showing operation of the azimuth filter 33. If the previous azimuth position, the current wheel position and the previous filter velocity V are all valid, then the azimuth position is predicted. If the AHRS azimuth position as obtained from the inertial navigation unit is valid, then the current azimuth position AZ is set to a weighted average of the predicted position $AZ_{PRED}$ and the AHRS position $AZ_{AHRS}$ as given by $AZ=k \cdot AZ_{PRED} + (1-k) \cdot AZ_{AHRS}$. If the AHRS azimuth position $AZ_{AHRS}$ is not valid, then the current azimuth position AZ is set to the predicted value, $AZ_{PRED}$.

Fig. 8 is a flow diagram showing operation of the velocity component computation unit 32. If the filter velocity V and the azimuth position AZ are both valid, then horizontal and vertical components $V_x$ and $V_y$ respectively of the filter velocity V are derived by:

$$V_x = V \cdot \cos(AZ)$$

$$V_y = V \cdot \sin(AZ)$$

If any of the previous azimuth position, the current wheel position and the previous filter velocity V are not valid, but the AHRS azimuth position $AZ_{AHRS}$ is valid, then the azimuth position is set to the AHRS azimuth position $AZ_{AHRS}$. But if the AHRS azimuth position $AZ_{AHRS}$ is also not valid, the there is no solution.

The navigation data filter 30 described above with reference to Figs. 4 to 8 may be used in an unmanned vehicle navigation system of the type described with reference to Figs. 1 to 3. However, it may also in a manned vehicle navigation system. For example, it has been tested successfully in a helicopter guidance system having a set of various navigation sensors providing data at different update times.

It will also be understood that the system according to the invention may be a suitably programmed computer. Likewise, the invention contemplates a computer program being readable by a computer for executing the method of the invention. The invention further contemplates a machine-readable memory tangibly embodying a program of instructions executable by the machine for executing the method of the invention.

**Claims**

1. A method for automatically guiding an unmanned vehicle along a predetermined route, the method comprising:

(a) selecting first, second, third and fourth locations along said route defining adjacent first, second and third linear portions for a current iteration such that the first and second linear portions meet at the second location and the second and third linear portions meet at the third location;

(b) if an imaginary circle can be constructed that is mutually tangential to all three of said first, second and third linear portions or to projections thereof: i) guiding the vehicle according to the circle intercept method as herein defined until it reaches an imaginary point of contact (M) between said circle and the second linear portion or passes its traverse; and ii) thereafter selecting a fifth location along the route so that the second, third, fourth and fifth locations of the current iteration respectively constitute said first, second, third and fourth locations of a successive iteration and repeating from (b);

(c) if an imaginary circle cannot be constructed that is mutually tangential to all three of said first, second and third linear portions or to projections thereof: i) constructing an imaginary circle that is mutually tangential to the first and second linear portions; ii) guiding the vehicle along according to the leg intercept method as herein defined until the vehicle reaches an imaginary point of contact (M) between said circle and the first linear portion or passes its traverse; and iii) thereafter selecting a fifth location along the route so that the second, third, fourth and fifth locations of the current iteration respectively constitute said first, second, third and fourth locations for a successive iteration and repeating from (b).

2. The method according to claim 1, wherein in c(i) the imaginary circle that is mutually tangential to the first and second linear portions has a radius that is limited by technical properties of the vehicle.

3. The method according to claim 2, wherein the technical properties are included in the group: maximal wheel angle and wheel angle rate.

4. The method according to any one of claims 1 to 3, further including:

(d) obtaining successive current speed and wheel angle signals of the vehicle;
(e) obtaining successive current angle signals from an inertial navigation system;
(f) obtaining successive current GPS velocity and position signals ;
(g) filtering said signals to derive a current velocity signal of the vehicle;
(h) integrating the current velocity signal to determine a predicted vehicle position;

(i) comparing the predicted vehicle position with a current sensed position of the vehicle as determined by one or more vehicle positioning sensors;

(j) if a difference between the predicted vehicle position and the current sensed position of the vehicle exceeds a predetermined threshold, then: i) if the current sensed position remains stable for a predetermined number of successive iterations, using the predicted position and the current sensed position for position filtering, vehicle control generation and in a subsequent iteration; and ii) otherwise eliminating the current sensed position;

(k) determining a new position of the vehicle as a weighted average of the respective sensed positions and the predicted position; and

(l) using the new position to control the vehicle.

5. The method according to claim 4, wherein the sensed position is derived by one or more selected from a group consisting of a GPS position sensor and a beacon sensor.

6. A computer program comprising computer program code means for performing the method of any one of claims 1 to 5, when said program is run on a computer.

7. A computer program as claimed in claim 6 embodied on a computer readable medium.

**Patentansprüche**

1. Ein Verfahren zum automatischen Leiten eines unbemannten Fahrzeugs entlang einer vorbestimmten Route, wobei das Verfahren umfasst:

(a) Auswählen erster, zweiter, dritter und vierter Positionen entlang der genannten Route, die aneinandergrenzende erste, zweiter und dritte lineare Teile für eine gegenwärtige Iteration definieren, so dass sich der erste und der zweite lineare Teil an der zweiten Position treffen und der zweiter und der dritte Teil sich an der dritten Position treffen;

(b) wenn ein imaginärer Kreis konstruiert werden kann, der jeweils tangential zu allen drei der genannten ersten, zweiten und dritten linearen Teile oder deren Projektionen liegt: i) Leiten des Fahrzeugs gemäß des hierin definierten Kreisschneideverfahrens, bis es einen imaginären Kontaktpunkt (M) zwischen dem genannten Kreis und dem zweiten linearen Teil erreicht oder dessen Bahn passiert; und ii) danach Auswählen einer fünften Position entlang der Route, so dass die zweite, dritte, vierte und fünfte Position der gegenwärtigen Iteration jeweils die genannte erste, zweite, dritte und vierte Position einer darauf folgenden Iteration bilden, und Wiederholen von (b);

(c) wenn kein imaginärer Kreis konstruiert werden kann, der jeweils tangential zu allen drei der genannten ersten, zweiten und dritten linearen Teile oder deren Projektionen liegt: i) Konstruieren eines imaginären Kreises, der jeweils tangential zu dem ersten und zweiten linearen Teil liegt; ii) Leiten des Fahrzeugs gemäß des hierin definierten Teilstreckenschneideverfahrens, bis das Fahrzeug einen imaginären Kontaktpunkt (M) zwischen dem genannten Kreis und dem ersten linearen Teil erreicht oder dessen Bahn passiert; und iii) danach Auswählen einer fünften Position entlang der Route, so dass die zweite, dritte, vierte und fünfte Position der gegenwärtigen Iteration jeweils die genannte erste, zweite, dritte und vierte Position einer darauf folgenden Iteration bilden, und Wiederholen von (b).

2. Das Verfahren gemäß Anspruch 1, in dem in c(i) der imaginäre Kreis, der jeweils tangential zu dem ersten und zweiten linearen Teil liegt, einen Radius aufweist, der durch technische Eigenschaften des Fahrzeugs beschränkt ist.

3. Das Verfahren gemäß Anspruch 2, in dem die technischen Eigenschaften in der Gruppe enthalten sind: maximaler Lenkwinkel und Lenkwinkelrate.

4. Das Verfahren gemäß einem der Ansprüche 1 bis 3, das weiterhin einschließt:

(d) Erhalten einer sukzessiven gegenwärtigen Geschwindigkeit und von Lenkwinkelsignalen des Fahrzeugs;

(e) Erhalten von sukzessiven gegenwärtigen Winkelsignalen von einem Trägheitsnavigationssystem;

(f) Erhalten von sukzessiven gegenwärtigen GPS - Geschwindigkeits- und Positionssignalen;

(g) Filtern der genannten Signale, um ein gegenwärtiges Geschwindigkeitssignal des Fahrzeugs zu erhalten;

(h) Integrieren des gegenwärtigen Geschwindigkeitssignals, um eine vorhergesagte Fahrzeugposition zu bestimmen;

(i) Vergleichen der vorhergesagten Fahrzeugposition mit einer gegenwärtig detektierten Position des Fahrzeugs, wie sie von einem oder mehreren Fahrzeugpositionssensoren bestimmt wird;

(j) wenn ein Unterschied zwischen der vorhergesagten Fahrzeugposition und der gegenwärtig detektierten Position des Fahrzeugs eine vorbestimmte Schwelle überschreitet, dann: i) wenn die gegenwärtig detektierten Position für eine vorbestimmte Anzahl an sukzessiven Iterationen stabil bleibt, Verwenden der vorhergesagten Position und der gegenwärtig detektierten Position zum Positionsfiltern, zur Fahrzeugsteuerungserzeugung und in einer nachfolgenden Iteration; und ii) ansonsten Eliminieren der gegenwärtig detektierten Position;

(k) Bestimmen einer neuen Position des Fahrzeugs als ein gewichtetes Mittel der jeweiligen detektierten Positionen und der vorhergesagten Positionen; und

(l) Verwenden der neuen Position, um das Fahrzeug zu steuern.

**5.** Das Verfahren gemäß Anspruch 4, in dem die detektierte Position von einem oder mehreren aus einer Gruppe abgeleitet wird, die aus einem GPS - Positionssensor und einem Beacon-Sensor besteht.

**6.** Ein Computerprogramm, das ein Computerprogrammcodemittel zum Ausführen des Verfahrens von einem der Ansprüche 1 bis 5, wenn das genannte Programm auf einem Computer läuft, umfasst.

**7.** Ein Computerprogramm, wie es in Anspruch 6 beansprucht ist, das sich auf einem computerlesbaren Medium befindet.

**Revendications**

**1.** Procédé pour guider automatiquement un véhicule sans pilote le long d'un trajet prédéterminé, le procédé comprenant des étapes consistant à :

(a) sélectionner des premier, deuxième, troisième et quatrième emplacements le long dudit trajet définissant des première, deuxième et troisième parties linéaires adjacentes pour une itération actuelle telle que les première et deuxième parties linéaires se rencontrent au deuxième emplacement et les deuxième et troisième parties linéaires se rencontrent au troisième emplacement ;

(b) si un cercle imaginaire qui est mutuellement tangent à toutes les trois desdites première, deuxième et troisième parties linéaires ou à des projections de celles-ci peut être construit : i) guider le véhicule conformément au procédé d'interception de cercle tel que défini ici jusqu'à ce qu'il atteigne un point de contact imaginaire (M) entre ledit cercle et la deuxième partie linéaire ou le dépasse ; et ii) sélectionner ensuite un cinquième emplacement le long du trajet de sorte que les deuxième, troisième, quatrième et cinquième emplacements de l'itération actuelle constituent respectivement lesdits premier, deuxième, troisième et quatrième emplacements d'une itération successive et répéter à partir de (b) ;

(c) si un cercle imaginaire qui est mutuellement tangent à toutes les trois desdites première, deuxième et troisième parties linéaires ou à des projections de celles-ci ne peut pas être construit : i) construire un cercle imaginaire qui est mutuellement tangent aux première et deuxième parties linéaires ; ii) guider le véhicule selon le procédé d'interception de portion de trajectoire tel que défini ici jusqu'à ce que le véhicule atteigne un point de contact imaginaire (M) entre ledit cercle et la première partie linéaire ou le dépasse ; et iii) sélectionner ensuite un cinquième emplacement le long du trajet de sorte que les deuxième, troisième, quatrième et cinquième emplacements de l'itération actuelle constituent respectivement lesdits premier, deuxième, troisième et quatrième emplacements pour une itération successive et répéter à partir de (b).

**2.** Procédé selon la revendication 1, dans lequel en c (i) le cercle imaginaire qui est mutuellement tangent aux première et deuxième parties linéaires a un rayon qui est limité par les propriétés techniques du véhicule.

**3.** Procédé selon la revendication 2, dans lequel les propriétés techniques sont comprises dans le groupe consistant en un angle de roue maximal et un taux d'angle de roue.

**4.** Procédé selon l'une quelconque des revendications 1 à 3, comprenant en outre des étapes consistant à :

(d) obtenir des signaux de vitesse et d'angle de roue actuels successifs du véhicule ;

(e) obtenir des signaux d'angle actuel successifs d'un système de navigation inertiel ;

(f) obtenir des signaux de vitesse et de position GPS actuelles successifs ;

(g) filtrer lesdits signaux pour déduire un signal de vitesse actuelle du véhicule ;

(h) intégrer le signal de vitesse actuelle pour déterminer une position de véhicule prédite ;

(i) comparer la position de véhicule prédite avec une position détectée actuelle du véhicule telle que déterminée par un ou plusieurs capteurs de positionnement de véhicule ;

(j) si une différence entre la position de véhicule prédite et la position détectée actuelle du véhicule dépasse un seuil prédéterminé, alors : i) si la position détectée actuelle reste stable pendant un nombre prédéterminé d'itérations successives, utiliser la position prédite et la position détectée actuelle pour un filtrage de position, une génération de commande de véhicule et dans une itération suivante ; et ii) autrement, éliminer la position détectée actuelle ;

(k) déterminer une nouvelle position du véhicule en tant que moyenne pondérée des positions détectées respectives et de la position prédite ; et

(1) utiliser la nouvelle position pour commander le véhicule.

5. Procédé selon la revendication 4, dans lequel la position détectée est déduite par un ou plusieurs éléments sélectionnés d'un groupe consistant en un capteur de position GPS et un capteur de balise.

6. Programme d'ordinateur comprenant des moyens formant code de programme d'ordinateur pour mettre en oeuvre le procédé selon l'une quelconque des revendications 1 à 5, lorsque ledit programme s'exécute sur un ordinateur.

7. Programme d'ordinateur selon la revendication 6 mis en oeuvre sur un support pouvant être lu par un ordinateur.

Road Segment Case Definition

Sliding Window - Road Segment Analysis

## FIG. 1

Intercept point

Tangent to circle

Vehicle initial position

Circle interception concept

Intercept point

Vehicle initial position

Leg interception concept

## FIG. 2a

## FIG. 2b

## Notation:

$\Psi_{i,i+1,i+2}$ -angle between the segments i,i+1,i+2

$\beta_{j,j+1}$ - segment j,j+1 bearing

$$\Psi_{123} = \beta_{12} - \beta_{23}$$
$$\Psi_{234} = \beta_{23} - \beta_{34}$$

Yes ← $\Psi_{123} * \Psi_{234} > 0$ → No

**Compute:**
R_of_Circle
Center_of_Circle (coordinates);
Break Point M (coordinates);
Flag_Circle=True

**Compute:**
Break Point M (coordinates);
Flag_Circle=False

**Computed Segment Parameters:**
R_of_Circle
Center_of_Circle (coordinates);
Break Point M (coordinates);
Flag_Circle

Move Sliding Window to the Next Point

**Current inputs:**
Present Position
Present Velocity
Present Wheel Angle

Wheel Angle Computation Algorithm

M behind? — Yes / No

Wheel command from Circle ← Yes — Flag_Circle = True — No → Wheel command from Interval

Wheel Angle

FIG. 3

EP 1 899 778 B1

```
                                        ┌─32
                              ┌─────────────────────────┐
              ┌─31            │   VELOCITY COMPONENT    │◄── GPS VELOCITY
              │              │   COMPUTATION UNIT      │      SIGNAL
┌─────────────────────┐      └─────────────────────────┘
│                     │◄─────────────┘
│                     │
│   VELOCITY FILTER   │      ┌─────────────────────────┐
│                     │◄─────│     AZIMUTH FILTER      │◄── AHRS ANGLE
│                     │      └─────────────────────────┘      SIGNAL
└─────────────────────┘                   │
           │                             └─33
           ▼
┌─────────────────────┐
│     INTEGRATOR      │─34
└─────────────────────┘
           │
           ▼
35 ─┌─────────────────────┐      ┌─────────────────────────┐
    │     COMPARATOR      │◄─────│    EXTERNAL SENSOR      │─36
    │ ABNORMAL    NORMAL  │      └─────────────────────────┘
    └─────────────────────┘
         │          │
         ▼          ▼
38 ─┌──────────────┐  ┌──────────────┐
    │ ABNORMAL DATA │  │ WEIGHTING UNIT │─37
    │ PROCESSING UNIT│  └──────────────┘        ─30
    └──────────────┘
         │
         ▼
    ┌──────────────┐
    │   COUNTER    │─39
    └──────────────┘
```

FIG. 4

## Navigation Data Filter

```
┌──────────────┐     ┌──────────┐     ┌──────────┐     ┌──────────┐
│ Vehicle:     │     │ Velocity │     │ Angles   │     │ AHRS     │
│ Speed,       │ ──▶ │ Filtering│ ◀── │ Filtering│ ◀── │ Angles   │
│ Wheel Angle  │     │ Logic    │     │ Velocity │     │ GPS      │
└──────────────┘     └──────────┘     │ Filtering│     │ Velocity │
                                      └──────────┘     └──────────┘
```

Vehicle: Speed, Wheel Angle

Velocity Filtering Logic

Angles Filtering Velocity Filtering

AHRS Angles GPS Velocity

Current Filtering

Prediction of next position using GPS "Abnormal" position and Current velocity

Next Compulation Loop

Position Integration

n = 1

Abnormal Position Stable?    No

*) Input GPS Position

Predicted_ Position: GPS_Position >Threshold

No    Yes

n = n+1

GPS Position

No Action: Don't use the GPS position

New Position: Weighted Average Filter Mix

Predicted Position

GPS Position

n = N_max ?    No

Yes

*) Similar for Beacon and Beacon-GPS combination

Eliminate GPS Position

FIG. 5

**Velocity Filtering Logic**

FIG. 6

Azimuth Filtering Logic

FIG. 7

**Velocity Component Computation**

FIG. 8

**EP 1 899 778 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6453238 B, Brodie
- US 5923270 A, Sampo
- US 4700302 A, Arakawa
- US 6539294 B, Kageyama
- US 6205401 B, pickhard